# EUROPEAN PATENT SPECIFICATION

(11) **EP 3 504 960 B1**
(45) Date of publication and mention of the grant of the patent: **18.11.2020**
(21) Application number: 19150086.7
(22) Date of filing: 02.01.2019
(51) Int. Cl.: A01G 9/08, A01G 9/029

(54) **GROWTH SYSTEM, USE, AND METHOD FOR PLANTING OUT OR TRANSPLANTING**
WACHSTUMSSYSTEM, VERWENDUNG UND VERFAHREN ZUM PFLANZEN ODER UMPFLANZEN
SYSTÈME DE CROISSANCE, UTILISATION ET PROCÉDÉ DE PLANTATION OU DE TRANSPLANTATION

(30) Priority: 02.01.2018 NL 2020225
(43) Date of publication of application: 03.07.2019
(73) Proprietor: Houdstermaatschappij Modiform B.V., 3831 KA Leusden (NL)
(72) Inventor: Smal, Gerardus Hendrikus, 3831 KA Leusden (NL)
(74) Representative: V.O.

(56) References cited:
- EP-A1- 0 120 642
- GB-A- 668 757
- GB-A- 737 660
- GB-A- 772 455
- US-A- 3 603 034
- US-A- 3 849 932
- US-A- 4 250 663
- US-A- 5 581 936
- US-B1- 6 405 481

## Description

The invention relates to a method for planting out or transplanting one or multiple plants.

It is a well-known practice to plant out or to transplant plants, in particular plants which have been nursed in a plant nursery where plants are propagated from a seed or a clone, for instance a cutting, to a young plant, for example a young plant being a few weeks or few months old. In the plant nursery, the young plants may grow in a plant pot or directly in the ground, for example in parallel nursery rows. After the plants have been propagated to a desired size or age, the plants can be transplanted to their desired final location where a grower plans to grow the plants. First nursing the plants at one location and subsequently transplanting them to their final location, may have different advantages over planting the cuttings or sowing the seeds directly at the desired final location. For example, the plants may be nursed at a location with relatively good conditions for young plants. The conditions with regards to temperature, absence of seasonal pests, accessibility, and/or presence of irrigation means, can for instance be better at the nursery location than at the plants' final location. For example, it is noted that grapevine cuttings may be planted in a pot or in a nursery field, where it may be less cumbersome to keep them watered than at their final location, and a few weeks later, when the young plants have gained roots and leaves, they may be transplanted to a vineyard.

Although such methods may thus be advantageous over planting the cuttings or sowing the seeds directly at the desired final location, planting out plants grown in pots or transplanting plants nursed in full soil can have disadvantages as well. For instance, transplanting or outplanting plants may be labor-intensive. Additional or alternatively, the plant may usually endure stress during outplanting, as a result of which the plant may even die. For example, up to 50% of outplanted grapevines may die within the first months after they have been outplanted.

United States Patent 3,849,932 discloses an apparatus for initially starting plants from seeds comprising a rectangular container releasably holding a corrugated support element, wherein open ended troughs fit within grooves of the corrugated support element, wherein top edges of the sides of the troughs include upwardly projecting tabs which enable access to the troughs when supported in the container.

Publication GB 668,757 discloses a plant or seed box comprising an outer container built up from a pair of end walls and a body portion extending between and attached to the end walls, and an inner soil support spaced from the body portion and formed with apertures giving access to the soil contained in the support, wherein edges of the support extend somewhat above the outer container to facilitate lifting out.

Publication GB 737,660 discloses a box or tray for seed propagation comprising a pair of end member or plates between which one or more channel-forming members extend to provide a series of parallel open channels, the depth of each channel being not less than half of the height of the end members or plates, and the latter serving to close the ends of the channels.

United States Patent 5,581,936 discloses a plant propagation tray having a bottom which is formed with a plurality of substantially parallel spaced apart raised inverted V-shaped ridges which extend across substantially the entire bottom of the tray and which are perforated by means of holes to allow for aeration, wherein the tray can include a substantially rectangular perforated sheet having the holes and the inverted V-shaped ridges, wherein said tray may be for retro-fitting an existing container with the perforated inverted V-shaped ridges above which seeds or cuttings can be planted. To remove the plants from the tray, when they are ready for planting outside, a square is cut around the plant with a knife, and the cubic volume of soil containing the plant's root system is lifted out of the tray, and the same is then ready for planting.

United States Patent 4,250,663 discloses a propagator for growing and transplanting plants, comprising a container with a V-shaped cross section defined by two boundary wall that are being independently movable from each other to dismantle the container.

United States Patent 3,603,034 discloses a plant-growth structure including an elongated container providing a chamber, a top cover overlying the chamber and growth media therein, and an irrigation system running through the chamber.

Publication GB 772,455 discloses a device for growing seeds, seedlings or plants, having a base and one or more side walls upstanding perpendicularly from the base, the side walls being insufficient in number to complete an enclosure on all sides round the base.

United States Patent US 6,405,481 discloses a container comprising a sidewall provided with tear lines to remove a portion of the sidewall to expose growth medium in said container.

Publication EP 0 120 642 A1 discloses an apparatus for cultivating seedlings, including a plurality of cells connectable to one another to from an integral row of cells, wherein each of the cells is open at at least one end thereof for receiving a seed and a growth supporting soil therein.

It is an object of the disclosure to provide an alternative method for planting out or transplanting one or multiple plants. In particular, it can be an object of the disclosure to provide a method, wherein at least one of the disadvantages of the prior art methods is counteracted. More in particular, the disclosure may aim to provide a method for planting out or transplanting one or multiple plants, wherein at least one of the disadvantages mentioned above is counteracted. In embodiments, the disclosure aims at providing a method for planting out or transplanting one or multiple plants which can facilitate that plants endure relatively little stress due to outplanting.

Thereto, the disclosure provides for a method for planting out or transplanting at least one plant, comprising the steps of providing a growth system which comprises a holder at least partly defining at least one room holding a growth medium in which at least one plant is provided, and which growth system further comprises a support for receiving the holder and for supporting the holder in a substantially upright position of said holder, wherein the support is provided with one or more openings; pushing the holder upwardly out of the support by means of at least one ejecting pin or rod which passes through a respective one of the one or more openings; moving away a first wall element from a position in which it temporarily closed off a distal end side of said room at least partly; and taking the growth medium with the plants out of the holder by sliding the growth medium through the open distal end side of the room.

Further, the disclosure provides for a growth system for growing plants, comprising a holder which at least partly defines at least one room for holding a growth medium, wherein the top side of said room is open at least partly such as to allow plants to extend upwardly from growth medium held in said room during use of the growth system, and wherein the growth system further comprises a first wall element for temporarily substantially closing off a distal end side of said room and which first wall element can be moved away such that growth medium can be slid out of said room through the then open distal end side of the room, wherein the growth system further comprises a support for receiving the holder and for supporting the holder in a substantially upright position of said holder, wherein the support is provided with one or more openings that can let pass there through an ejecting pin for pushing the holder upwardly out of the support, and wherein the support comprises guiding means, such as converging guiding surfaces and/or a tapering aligning channel, for guiding the ejecting pin towards the respective opening.

By allowing the growth medium with the plants to be slid out of the room through an opened distal end side of the room, instead of pulling the plants and growth medium out of a holder in an upward direction, it can be counteracted that the roots of the plants are pulled loose from the growth medium to some extent. As a result, damage to the plant's root system can be counteracted and/or transplanting may be relatively little stressful for the plants.

By providing the growth system with two removable wall elements, in particular located at substantially opposite end sides of the room for holding the growth medium, it can be facilitated that, after moving the wall elements away from their positions closing off respective end sides of the room, one can at one end side of the room push against the uncovered growth medium in order to slide it out of said at the opposite uncovered end side of the room.

By forming the growth medium as a substantially coherent block, and/or by bonding together particles, in particular soil particles, that form part of the growth medium, in particular by means of a bonding agent, such as a soil glue, it can be facilitated relatively well that the growth medium can be slid out of the holder as an integral whole, in particular without substantially disintegrating, which for instance may facilitate that roots of the plant can be kept being rooted relatively well, thereby counteracting transplant shock, such as stress or damage to the plant.

By providing a support for receiving the holder and for supporting the holder in a substantially upright position of said holder, wherein at least one of the at least one removable wall element is part of the support, in particular being formed by a substantially upwardly extending side wall of said support, and wherein the holder, which for instance can be formed as a tray, has one or multiple open end sides, these one or multiple end sides can be temporarily closed off by the support, and said one or multiple open end sides can be released by separating the holder from the support at least partly. Hence, the growth system may for instance be of a relatively elegant and/or relatively simple design, which for instance may lack hinging wall elements and/or other relatively complicated and/or relatively error prone elements.

It is noted that the support may be formed substantially as a tray which can receive the holder therein.

By providing the support, in particular a bottom wall thereof, with one or more openings that can let pass there through an ejecting pin for pushing the holder upwardly out of the support, it can be facilitated that the holder and the support can be separated at least partly in a relatively simple manner.

Advantageous embodiments according to the present disclosure are described in the appended claims.

By way of non-limiting examples only, embodiments of the present disclosure will now be described with reference to the accompanying figures in which:
Fig. 1 shows a schematic perspective exploded view of an embodiment of a growth system comprising a holder and a support according to an aspect of the disclosure;
Fig. 2 shows a schematic perspective view of the growth system of Fig. 1 in an assembled state and filled with growth medium; and
Fig. 3 shows a schematic perspective view of the growth system of Figs. 1 and 2 in a state in which the holder and the support have been separated; and
Fig. 4 shows a schematic perspective view of a block of growth medium with plants which has been removed from the growth system.

It is noted that the figures show merely preferred embodiments according to the disclosure. In the figures, the same or similar reference signs or numbers refer to equal or corresponding parts.

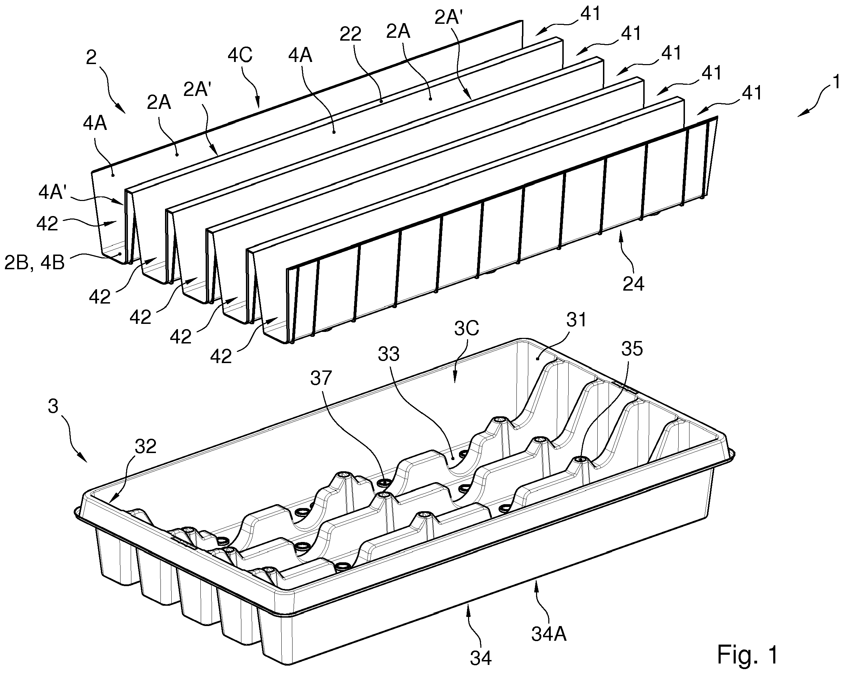

Figure 1 shows a schematic perspective exploded view of an embodiment of a growth system 1, or so-called growth device 1, for growing one or more plants 6. Said system 1, which may be formed as an assembly of multiple parts, may be used to nurse one or more plants 6, and/or to propagate at least one plant from a seed or a clone, for instance a cutting, to a young plant, for example a young plant being a few weeks or few months old, for example in order to subsequently outplant said plant at a location, such as a vineyard or other yard, where one wants to grow and/or exploit the plant 6.

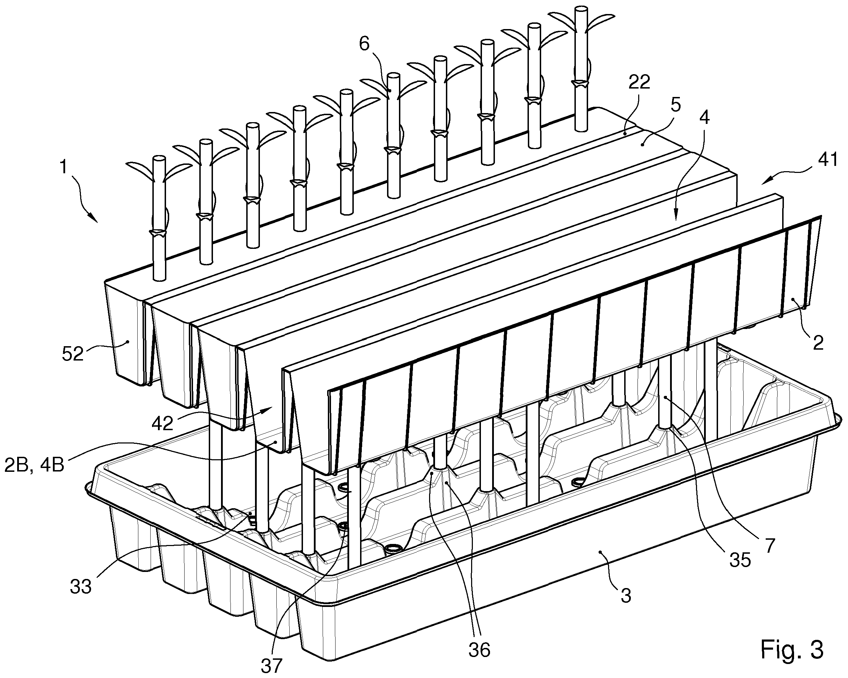

For example, as is schematically shown in Fig. 3, the plants 6 may be vines, such as grapevines, which are propagated from a cutting, in particular a stem cutting, planted into the growth system 1. However, other plants 6 may be nursed or propagated by means of the growth system 1, for example other vines or plants which look like vines, such as strawberry plants, which produce runners that seem to mimic vine growth, or such as raspberries plants, which are bushes. In embodiments, the growth system 1 may be used for other plants as well, including for instance plants which do not look like vines.

The growth system 1 comprises a holder 2, which, in the shown embodiments, at least partly defines five rooms 4 for holding a growth medium 5. However, in other embodiments, the holder may define another number of rooms at least partly. For example, the holder 2 may define a single room at least partly, or may for instance define two, three or four rooms at least partly. In alternative embodiments, more than five rooms 4 may be defined at least partly by the holder 2.

The top side 4C of the room 4 defined at least partly by the holder 2 is open at least partly such as to allow plants 6 to extend upwardly from growth medium 5 held in said room 4 during use of the growth system 1, as can be seen in Figure 3.

The growth system 1 further comprises a first wall element 31 for temporarily substantially closing off a distal end side 41 of said room 4. The system 1 is arranged such that said first wall element 31 can be moved away from its position in which it temporarily substantially closes off the distal end side 41 of the room 4, for example by pivoting the first wall element 31 away or by separating it from the holder 2. Preferably, the removal of the wall element 31 is reversible, such that the first wall element can again substantially close off the room's distal end side 41, thereby facilitating that the growth system 1 may be used multiple times.

In the here shown embodiment, said wall element 31 is not a part of the holder 2, but forms a part of a support 3 for receiving said holder 2 and for supporting the holder 2 in a substantially upright position of said holder 2, in particular a position in which the at least partly open top side 4C of the room 4 faces upwards. The first wall element 31, which can be moved away from its position in which it substantially closes off the distal end side 41 of the room 4, which may be formed by the support 3, in particular by a substantially upwardly extending side wall 31 of said support 3.

Here, said first wall element 31 closes off the first open end side 41 of the room 4 when the growth system 1 is assembled, i.e. when he holder 2 is supported by the support 3 or so-called carrier 3. Preferably, the support 3 is arranged to accommodate the holder 2 at least partly. For instance thereto, the support 3 may be substantially formed as a tray 3 and/or may comprise a substantially open top side 3C through which the holder 2 can enter the support 3.

It is noted that a second wall element 32 for temporarily substantially closing off a second open end side 42 of the room 4, which second wall element 32 can be moved away from its position in which it substantially closes off said second open end side 42, in particular a proximal end side 42 of the room 4, can be formed by the same support 3, in particular by a respective substantially upwardly extending side wall 32 of said support 3.

Additionally or alternatively, the support 3, in particular one or more substantially upwardly extending side walls thereof, may be arranged to temporarily substantially close off multiple first open end sides 41 of multiple rooms 4, which for instance is the case in the shown embodiment.

In the shown embodiment, different rooms 4 are formed in a single holder 2. However, in alternative embodiments, multiple holders 2, each defining one or multiple rooms 4 for holding growth medium 5, may be supported by a single support 3.

Additionally or alternatively, the support 3, in particular one or more substantially upwardly extending side walls thereof, may be arranged to temporarily substantially close off multiple second open end sides 42 of multiple rooms 4, which may be defined by a single or by multiple holders 2.

Advantageously, the support 3 or so-called carrier 3 can enclose the holder and the growth medium 5 during use of the system 1, in particular during the nursing of cuttings, bulbs or other plants.

With regards to the at least one first wall element 31, and/or the one or multiple second wall elements 32, if any, it is noted that it can be removed from its position in which it, during use of the growth system 1, substantially closes off the respective end side 41, 42 of the room 4. In the shown embodiment, the first and second wall elements 31, 32 can for instance be separated from the holder 2, in particular by separating the holder 2 and the support 3. However, in other embodiments, one or more of the removable first and/or second wall elements 31, which in alternative embodiments may form part of the holder 2, may stay attached to said holder 2 when the respective wall element is removed from its position in which it closes off the respective end side 41, 42 of the room 4. For example, a removable wall element 31, 32 then forming part of the holder 2 may thereto be pivotable connected to an other part of the holder 2, for instance to a part defining a lateral side 4A, 4A' or a bottom side 4B of the room 4.

It is noted that the growth system 1 is thus arranged to allow the first wall element 31 to be moved away from its position in which it closes of the distal end side 41 of the room 4, such that growth medium 5 can subsequently be slid out of said room 4 through the then open distal end side 41 of the room 4. It will be appreciated that the then open distal end side 41 and the at least partly open top side 4C of the room 4 can allow that growth medium 5 with one or more plants 6 upwardly extending therefrom can thus be slid out of said room 4 by sliding said growth medium 5 through said open distal end side 41. Although the top side 4C does not need to be open completely, it is advantageous as it is at least open to such extent that it does not obstruct the plants 6 when the growth medium 5 is slid out of the room 4 through the opened distal end side 41 of said room 4. Preferably, said room's top side 4C can be substantially completely open, which for instance may facilitate inserting growth medium 5 into the room 4, and/or watering the plants 6.

It is noted that the holder 2 may substantially define at least the bottom side 4B or so-called floor 4B and two lateral sides 4A, 4A' of the room 4. The removable or movable distal end wall element 31 and/or a second wall element 32, which may be for temporarily substantially closing off another side of the room 4, may define further sides, in particular opposite end sides, more in particular a distal end side 41 and an opposite proximal end side 42 of the room 4. By moving the second wall element 32 away from its position in which it substantially closes off the proximal end side 42 of the room 4, the growth medium 5 can be uncovered at least partly at its proximal end 52, which may allow one to push against said growth medium 5 at its proximal end face 52 in order to push the growth medium 5 out of the room 4 through the uncovered distal end 41 of the room 4. It is noted that, although it may be advantageous to allow two opposite wall elements 31, 32 to be removed from their positions in which they each temporarily cover a respective one of two opposite end sides 41, 42 of the room 4, the growth medium 5 may also be pushed or pulled out of the holder 2 through the opened up distal end side 41 of the room when the room's proximal end side 42 would not have been opened up. For example, one could insert a plate shaped pushing element between the growth medium 5 and a proximal wall segment being part of the holder 2, and subsequently move said pushing element towards the opened distal end side 41 side of the room 4 defined at least partly by said holder 2 in order to shove out the growth medium 5. As another example, one could for instance simply push against the plants 6 growing in the growth medium 5 in order to slide the grove medium 5 out of the room 4.

For instance in order to facilitate that the growth medium 5 can be slid out of the room 4, side walls 2A, 2A' of the holder 2 which define the lateral sides 4A, 4A' of the room 4 may for instance diverge in a direction towards the openable distal end 41 of said room 4. Alternatively, such as for instance is the case in the shown embodiment, the lateral side walls 2A, 2A' of the holder 2 may extend in substantially parallel directions towards said openable distal end 41. Preferably, the longitudinal direction of the elongate room 4 extends towards the distal end side 41. For example, the side walls of the room may serve as guide surfaces when the growth medium 5 is slid out of the room 4.

In case both the distal end side 41 and the proximal end side 42 of the room can become uncovered, that may allow that the growth medium 5 can be slid out in two opposite directions, which may facilitate that handling of the growth system 1 can be relatively error insensitive and/or which may make the growth system 1 relatively versatile.

As can be seen in the shown exemplary embodiment, the room 4 may be elongate, for example to facilitate to nurse a row of plants 6, which can be integrally outplanted subsequently. Preferably, the longitudinal direction may extend substantially straight, and/or the side walls may extend substantially straight in the longitudinal direction.

In embodiments, the side walls 2A, 2A' of the holder 2 may, as is the case in the shown exemplary embodiment, be formed such that the room is diverging in an upward direction, which for instance may facilitate inserting the growth medium 5 into the room. For example, said side walls 2A, 2A' may slope outwardly in said upward direction.

Preferably, the room 4 may be substantially through shaped, as for instance is the case in the shown exemplary embodiment.

Although the room 4 may have a length being greater than its width, for instance having a length being at least two times, at least three time or at least four times greater than its width, the room may also be shaped differently. For example, the room 4 may have length less than two times its width, and may, when seen from above, for instance have a substantially square shape. This may for instance be advantageous when it is desired to integrally outplant an array of plants, e.g. multiple parallel rows of plants, in stead of a single row of plants 6. For instance, the growth medium 5 in the room 4 in the holder 2 may be substantially plate shaped, instead of substantially beam shaped, as is the case in the shown exemplary embodiment.

It is noted that the growth medium 5 may be substantially formed as a coherent block, in particular substantially corresponding with the shape of the room 4 for holding said growth medium 5. For example, the substantially coherent block of growth medium 5 can be formed substantially as an elongate block, such as substantially as a rectangular cuboid or other prism, e.g. a prism having base 52 substantially formed as a quadrilateral, in particular a convex quadrilateral, more in particular an acute trapezoid, yet more in particular an isosceles trapezoid, such as is the case in the here shown exemplary embodiment.

Advantageously, the growth medium 5, which can serve as a plant substrate, can comprise particles, in particular soil particles, that are bonded together, in particular by means of a bonding agent, such as a soil glue. This may facilitate in that the growth medium 5 can be kept together when the at least one plant 6 growing therein is being planted out. It is noted that the growth medium 5 may be pourable, e.g. not yet bonded together, when it is inserted, e.g. dumped, into the room 4. For example, the bonding agent may subsequently be poured onto the growth medium in order to bond it together. Alternatively, the bonding agent may be added to the growth medium particles before inserting them into the room 4, but may not be cured yet, such that it can cure after the growth medium has been introduced in the room.

In embodiments, the growth medium 5 may be bonded together in the room 4 in order to create a growth block or beam before the cutting, bulb or other plant is placed into the growth medium 5.

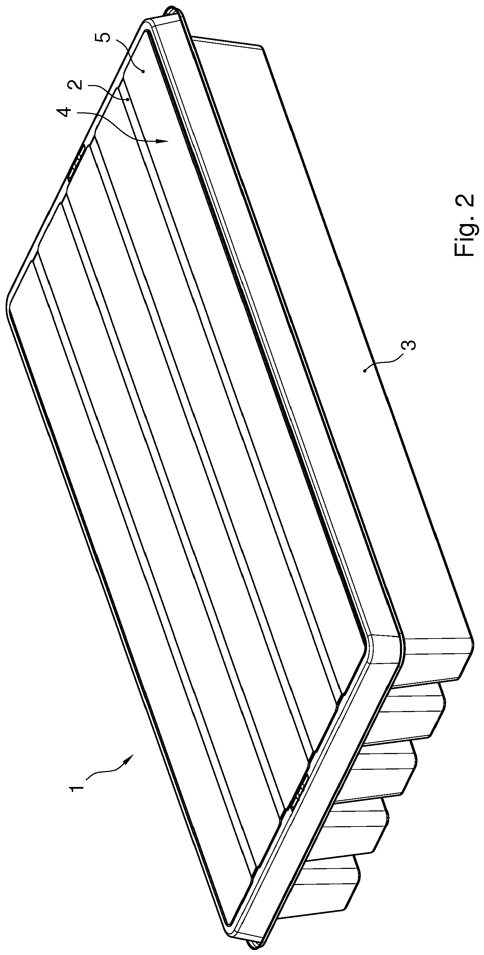

As can be seen in Figure 2, the support 3, in particular a bottom wall 33 thereof, may be provided with one or more drainage holes 37. Additionally, or alternatively, the support 3 can be provided with one or more spacers (not shown), in particular legs, such that a bottom side 34A of the support's bottom wall 34 can be held spaced apart from a floor surface on which the support 3 is placed during use of the growth system 1. For example, said spacers or legs may be provided at said support's bottom wall's bottom side 34A.

Although surplus water may for instance flow from the room 4 towards a drainage hole 37 in the support 3 via a passage 41, 42 formed by a respective open end side 41, 42 of the holder 2, the holder 2 may additionally, or alternatively, be provided with one or more drainage holes, which may preferably be located in a bottom wall 2B of the holder which defines the floor of the room 4 at least partly. Preferably, during use of the growth system 1 or so-called grow device 1, the at least one drainage hole

(not shown) provided in the room's bottom wall 4A can be located substantially above a corresponding one of the one or multiple drainage holes 37 provided in the support's bottom wall 33.

According to the invention, the support 3 or so-called carrier 3 is provided with one or more openings 35 that can let pass there through an ejecting pin or rod 7 for pushing the holder 2 upwardly out of the support 3. As can be understood from Figure 3, the carrier 3 comprises guiding means 36, such as converging guiding surfaces and/or a tapering aligning channel, for guiding the ejecting pin 7 towards the respective opening 35.

For example, a respective ejecting pin 7 may engage a bottom wall 24 of the holder in order to eject the holder 2. Alternatively, the ejecting pin 7 may engage an under side of a flange 22 or other protrusion extending from a side wall 2A, 2A' of the holder 2. Here, the flange 22 engaged by the ejecting pin 7 is interconnecting two adjacent side walls 2A', 2A of the holder 2 that each define a respective lateral side 4A', 4A of two adjacent rooms 4 at least partly defined by said holder 2.

By ejecting the holder 2 from the support by means of ejecting pins 7 inserted at least partly between such adjacent side walls 2A', 2A of the holder 2, the ejected holder 2 can be kept relatively stable, and it may for instance be counteracted in a relatively elegant manner that the ejected holder 2 may tip over.

The growth system 1 may for instance be utilized in a method for planting out or transplanting at least one plant 6. Said method may comprise a first step of providing a growth system 1. In particular, said growth system 1 may be a system 1 according to one or multiple of the embodiments described above. The growth system 1 provided in said first step comprises a holder 2 at least partly defining at least one room 4 holding a growth medium 5 in which at least one plant 6 is provided. Said plant 6 may be a vine, e.g. a grapevine, propagated from a cutting, especially a stem cutting, and may for instance be nursed for a few weeks, such as about four to five weeks, after the cutting has been planted in the growth medium 5.

The method further comprises a step of moving away at least a first wall element 31 from a position in which it temporarily closed off a distal end side 41 of said room 4 at least partly. In embodiments, also a second wall element 32 may be moved away from a position in which said second wall element 32 temporarily closed off a second end side 42, in particular a proximal end side 42, of the room 4 at least partly. In case a second wall element 32 for covering a second end side 42 of the same room 4 is moved away, this may be done at least partly prior to, at least partly subsequent to, and/or at least partly simultaneous with moving the first wall element 31 away from its initial position.

For example, at least the first wall element 31, and preferably the second wall element 32, if any, as well, may be removed from their initial spot by at least partly separating the holder 2 from a carrier 3 or so-called support 3 which includes said first wall element 31, and preferably said second wall element 32. For instance, the holder may be lifted from the support or may be pushed out, for example by means of one or more ejecting pins 7 which are pushed through respective holes 35 in the support 3 in order to abut against the holder 2 and to lift the holder from the support 3. It will be appreciated that the holder 2 may also be lifted with respect to the support 3, but supporting the holder on the one or more ejecting pins 7 or the like and by subsequently moving the support down in stead of moving the holder 2 up.

After the respective wall element 31 or wall elements 31, 32 have been moved away from their blocking position, the growth medium with the plants can be taken out of the holder by sliding the growth medium 5 through the open distal end side 41 of the room 4, for instance by pushing against a then uncovered proximal end face 52 of said growth medium 5, i.e. via the then open proximal end side 42 of the room 4.

Advantageously, the growth medium 5 forms, at least at the moment when it is to be removed from the holder, a substantially coherent block, for instance at least partly formed by bonding particles or elements of the growth medium together by means of a binding agent. However, alternatively or additionally, the roots of one or more plants 6 may hold the growth medium 5 together to some extent, thereby facilitating that the said growth medium 5 may substantially form a coherent block.

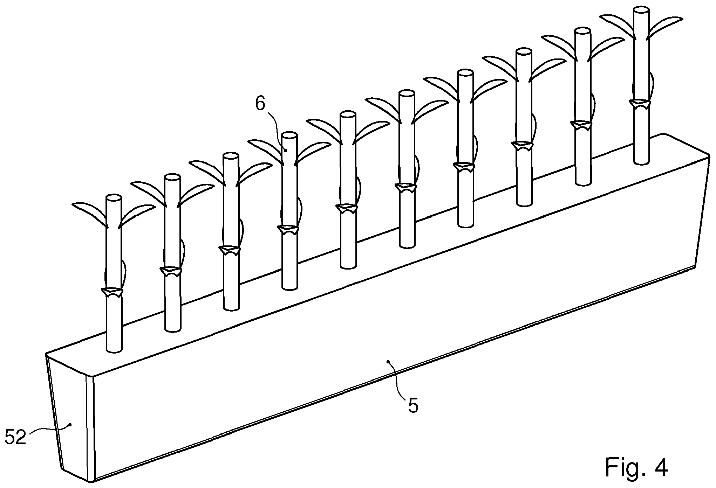

After, or even at least partly simultaneous with sliding the growth medium 5 out of the room 4 defined at least partly by the holder 2, said growth medium 5, preferably a block of growth medium kept together in one way or the other, may be placed into the ground at the desired final location of the plant 6. In embodiments, in particular in case the growth medium forms a rather solid block, the growth medium with plants may be removed from the system 1, such as is shown in Fig. 4, and may be transported subsequently to its final destination. However, the step of sliding the growth medium out of the room 4, and preferably also the step of moving the respective wall element 31 or wall elements 31, 32 away from their blocking position, which may be performed manually or mechanically, may preferably be performed at or near the location where the one or more plants 6 have to be planted out.

After the growth medium and the one or more plants have been removed from the growth system 1, the growth system 1 may be reused partly or completely. For example, the support 3 may again receive the removed holder 2, preferably after inspecting and/or cleaning said holder 2 and/or said support 3, after which the room 4 may be filled with growth medium 5 and one or more plants, cuttings and/or seeds or the like may be placed.

It is noted that for the purpose of clarity and a concise description features are described herein as part of the same or separate embodiments, however, it will be appreciated that the scope of the invention may include embodiments having combinations of all or some of the features described.

Further, it is noted that the invention is not restricted to the embodiments described herein. It will be understood that many variants are possible.

For example, the holder and/or the support may be formed by any suitable means, from any suitable material. For example, the support may be formed from a plastic material, e.g. a plastic sheet material, for instance by means of thermoforming. Additional or alternatively, the holder may be made by injecting molding, in particular from a plastic material.

Further, it is noted that it will be appreciated that in the context of this disclosure, a plant may be formed by a bulb. As mentioned above, plants, for example bulbs, may be nursed in an array other than a row, for example an array of parallel rows. For example then, the room may be substantially plate shaped and/or relatively wide with respect to its length.

Such and other variants will be apparent for the person skilled in the art and are considered to lie within the scope of the invention as formulated in the following claims.

## Claims

1. Growth system (1) for growing plants (6), comprising a holder (2) at least partly defining at least one room (4) for holding a growth medium (5), wherein the top side of said room (4) is open at least partly such as to allow plants (6) to extend upwardly from growth medium (5) held in said room (4) during use of the growth system (1), and wherein the growth system (1) further comprises a first wall element (31) for temporarily substantially closing off a distal end side (41) of said room (4) and wherein the growth system (1) is arranged to allow the first wall element (31) to be moved away such that growth medium (5) can be slid out of said room (4) through the then open distal end side (41) of the room (4), wherein the growth system (1) further comprises a support (3) for receiving the holder (2) and for supporting the holder (2) in a substantially upright position of said holder (2), **characterised in that** the support (3) is provided with one or more openings (35) that can let pass there through an ejecting pin (7) for pushing the holder (2) upwardly out of the support (3), and wherein the support (3) comprises guiding means (36), such as converging guiding surfaces and/or a tapering aligning channel, for guiding the ejecting pin (7) towards the respective opening (35).

2. Growth system (1) according to claim 1, wherein the growth system (1) further comprises a second wall element (32) which is for temporarily substantially closing off a proximal end side (42) of said room (4) located opposite to its distal end side (41), and which second wall element (32) can be moved away from its position in which it substantially closes off the proximal end side (42) of the room (4).

3. Growth system (1) according to claim 1 or 2, wherein the first wall element (31), which can be moved away from its position in which it substantially closes off the distal end side (41) of the room (4), is formed by the support (3), in particular by a substantially upwardly extending side wall (31) of said support (3).

4. Growth system (1) according to claims 1-3, wherein the second wall element (32), which can be moved away from its position in which it substantially closes off the proximal end side (42) of the room (4), is formed by the support (3), in particular by a substantially upwardly extending side wall (32) of said support (3).

5. Growth system (1) according to claim 3 or 4, wherein the support (3) comprises a bottom wall (33), and wherein said support's bottom wall (33) is provided with one or more drainage holes (37).

6. Growth system (1) according to any one of the preceding claims, wherein a bottom wall (2B) of the room (4) for holding growth medium (5) is provided with one or more drainage holes.

7. Growth system (1) according to claims 5 and 6, wherein the growth system (1) is arranged such that, when the support (3) is supporting the holder (2) during use of the growth system (1), the at least one drainage hole provided in the room's bottom wall (2B) is located substantially above the at least one drainage hole (37) provided in the support's bottom wall (33).

8. Growth system (1) according to claim 3, 4, 5, or 7, in particular according to claim 5 or 7, wherein the support (3) is provided with one or more spacers, in particular legs, such that a bottom side (34A) of the support's bottom wall (34) can be held spaced apart from a floor surface on which the support (3) is placed during use of the growth system (1).

9. Growth system (1) according to any one of the preceding claims, wherein the growth system (1) further comprises at least one ejecting pin or rod (7) for pushing the holder (2) upwardly out of the support (3).

10. Growth system (1) according to any one of the preceding claims, wherein the room (4) is holding growth medium (5),
preferably wherein the growth medium (5) substantially forms a coherent block and/or the growth medium (5) comprises particles, in particular soil particles, that are bonded together, in particular by means of a bonding agent, such as a soil glue.

11. Use of a growth system (1) according to any one of the preceding claims, wherein the at least one room (4) is holding a growth medium (5) and at least one plant (6) is, and preferably multiple plants (6) are, growing in said growth system (5).

12. Method for planting out or transplanting at least one plant (6), comprising the steps of:
providing a growth system (1) which comprises a holder (2) at least partly defining at least one room (4) holding a growth medium (5) in which at least one plant (6) is provided, and which growth system (1) further comprises a support (3) for receiving the holder (2) and for supporting the holder (2) in a substantially upright position of said holder (2), wherein the support (3) is provided with one or more openings (35);
pushing the holder (2) upwardly out of the support (3) by means of at least one ejecting pin or rod (7) which passes through a respective one of the one or more openings (35);
moving away a first wall element (31) from a position in which it temporarily closed off a distal end side (41) of said room (4) at least partly; and
taking the growth medium (5) with the at least one plant (6) out of the holder (2) by sliding the growth medium (5) through the open distal end side (41) of the room (4).

13. Method according to claim 12, wherein the method further includes the steps of:
moving away a second wall element (32) from a position in which it temporarily closed off a proximal end side (42) of the room (4) at least partly; and
pushing against the growth medium (5) via the open proximal end side (42) of the room (4).

14. Method according to claim 13, wherein the second wall element (32) is formed by a second side wall (32) of the support (3), and wherein the step of moving away the second wall element (32) from the position in which it (32) temporarily closed off at least partly the proximal end side (42) of said room (4) includes the step of separating the holder (2) and the support (3) at least partly.

15. Method according to any one of claims 12-14, wherein the first wall element (31) is formed by a first side wall (31) of the support (3), and wherein the step of moving away the first wall element (31) from the position in which it (31) temporarily closed off at least partly the distal end side (41) of said room (4) includes a step of separating the holder (2) and the support (3) at least partly.

## Patentansprüche

1. Anzuchtsystem (1) zum Züchten von Pflanzen (6), umfassend einen Halter (2), der wenigstens teilweise wenigstens einen Raum (4) zum Halten eines Wachstumsmediums (5) definiert, wobei die Oberseite des Raums (4) wenigstens teilweise offen ist, um es den Pflanzen (6) zu ermöglichen, sich von dem Wachstumsmedium (5), das in dem Raum (4) gehalten wird, während der Verwendung des Anzuchtsystems (1) nach oben zu erstrecken, und wobei das Anzuchtsystem (1) ferner ein erstes Wandelement (31) zum vorübergehenden im Wesentlichen Verschließen einer distalen Endseite (41) des Raums (4) umfasst, und wobei das Anzuchtsystem (1) so angeordnet ist, dass es dem ersten Wandelement (31) ermöglicht so wegbewegt werden kann, dass das Wachstumsmedium (5) aus dem Raum (4) durch die dann offene distale Endseite (41) des Raums (4) herausgeschoben werden kann, wobei das Anzuchtsystem (1) ferner eine Stütze (3) zum Aufnehmen des Halters (2) und zum Abstützen des Halters (2) in einer im Wesentlichen aufrechten Position des Halters (2) umfasst, **dadurch gekennzeichnet, dass** die Stütze (3) mit einer oder mehreren Öffnungen (35) versehen ist, die einen Auswurfstift (7) passieren lassen können, um den Halter (2) nach oben aus der Stütze (3) herauszudrücken, und wobei die Stütze (3) Führungsmittel (36), wie konvergierende Führungsflächen und/oder einen sich verjüngenden Ausrichtungskanal, umfasst, um den Auswurfstift (7) zur jeweiligen Öffnung (35) zu führen.

2. Anzuchtsystem (1) nach Anspruch 1, wobei das Anzuchtsystem (1) ferner ein zweites Wandelement (32) umfasst, das dazu dient, eine gegenüberliegende proximale Endseite (42) des Raums (4) im Wesentlichen an seine distale Endseite (41) vorübergehend zu verschließen, und wobei das zweite Wandelement (32) von seiner Position wegbewegt werden kann, in der es die proximale Endseite (42) des Raumes (4) im Wesentlichen verschließt.

3. Anzuchtsystem (1) nach Anspruch 1 oder 2, wobei das erste Wandelement (31), das von seiner Position wegbewegt werden kann, in der es die distale Endseite (41) des Raumes (4) im Wesentlichen verschließt, durch die Stütze (3), insbesondere durch eine sich im Wesentlichen nach oben erstreckende Seitenwand (31) der Stütze (3) gebildet wird.

4. Anzuchtsystem (1) nach den Ansprüchen 1 bis 3, wobei das zweite Wandelement (32), das von seiner Position wegbewegt werden kann, in der es die proximale Endseite (42) des Raums (4) im Wesentlichen verschließt, durch die Stütze (3), insbesondere durch eine sich im Wesentlichen nach oben erstreckende Seitenwand (32) der Stütze (3) gebildet ist.

5. Anzuchtsystem (1) nach Anspruch 3 oder 4, wobei die Stütze (3) eine Bodenwand (33) umfasst, und wobei die Bodenwand (33) der Stütze mit einem oder mehreren Drainagelöchern (37) versehen ist.

6. Anzuchtsystem (1) nach einem der vorhergehenden Ansprüche, wobei eine Bodenwand (2B) des Raums (4) zum Halten des Wachstumsmediums (5) mit einem oder mehreren Drainagelöchern versehen ist.

7. Anzuchtsystem (1) nach den Ansprüchen 5 und 6, wobei das Anzuchtsystem (1) so angeordnet ist, dass, wenn die Stütze (3) den Halter (2) während der Verwendung des Anzuchtsystems (1) abstützt, sich wenigstens das eine Drainageloch in der Bodenwand des Raums (2B) im Wesentlichen über dem wenigstens einen Drainageloch (37) in der Bodenwand der Stütze (33) befindet.

8. Anzuchtsystem (1) nach Anspruch 3, 4, 5 oder 7, insbesondere nach Anspruch 5 oder 7, wobei die Stütze (3) mit einem oder mehreren Abstandshaltern, insbesondere Beinen, versehen ist, so dass eine Unterseite (34A) der Bodenwand (34) der Stütze in einem Abstand von einer Bodenfläche gehalten werden kann, auf der die Stütze (3) während der Verwendung des Anzuchtsystems (1) angeordnet ist.

9. Anzuchtsystem (1) nach einem der vorhergehenden Ansprüche, wobei das Anzuchtsystem (1) ferner wenigstens einen Auswurfstift oder eine Auswurfstange (7) umfasst, um den Halter (2) nach oben aus der Stütze (3) herauszudrücken.

10. Anzuchtsystem (1) nach einem der vorhergehenden Ansprüche, wobei der Raum (4) Wachstumsmedium (5) hält, wobei das Wachstumsmedium (5) vorzugsweise im Wesentlichen einen kohärenten Block bildet, und/oder das Wachstumsmedium (5) Partikel, insbesondere Bodenpartikel umfasst, die insbesondere mittels eines Bindemittels wie eines Bodenklebers miteinander verbunden sind.

11. Verwendung eines Anzuchtsystems (1) nach einem der vorhergehenden Ansprüche, wobei der wenigstens eine Raum (4) ein Wachstumsmedium (5) enthält und in diesem Anzuchtsystem (5) wenigstens eine Pflanze (6) wächst und vorzugsweise mehrere Pflanzen (6) wachsen.

12. Verfahren zum Auspflanzen oder Umpflanzen wenigstens einer Pflanze (6), umfassend die Schritte:
Bereitstellen eines Anzuchtsystems (1), das einen Halter (2) umfasst, der wenigstens teilweise wenigstens einen Raum (4) definiert, der ein Wachstumsmedium (5) enthält, in dem wenigstens eine Pflanze (6) vorgesehen ist, und wobei das Anzuchtsystem (1) ferner eine Stütze (3) zum Aufnehmen des Halters (2) und zum Abstützen des Halters (2) in einer im Wesentlichen aufrechten Position des Halters (2) umfasst, wobei die Stütze (3) mit einer oder mehreren Öffnungen (35) versehen ist;
Herausdrücken des Halters (2) nach oben aus der Stütze (3) mittels wenigstens eines Auswurfstifts oder einer Auswurfstange (7), die durch jeweils eine der einen oder mehreren Öffnungen (35) durchgeht;
Wegbewegen eines ersten Wandelements (31) von einer Position, in der es eine distale Endseite (41) des Raums (4) vorübergehend wenigstens teilweise verschließt; und
Entnehmen des Wachstumsmediums (5) mit der wenigstens einen Pflanze (6) aus dem Halter (2) durch das Schieben des Wachstumsmediums (5) durch die offene distale Endseite (41) des Raums (4).

13. Verfahren nach Anspruch 12, wobei das Verfahren ferner die folgenden Schritte umfasst:
Wegbewegen eines zweiten Wandelements (32) von einer Position, in der es eine proximale Endseite (42) des Raums (4) vorübergehend wenigstens teilweise verschließt; und
Drücken gegen das Wachstumsmedium (5) über die offene proximale Endseite (42) des Raums (4).

14. Verfahren nach Anspruch 13, wobei das zweite Wandelement (32) durch eine zweite Seitenwand (32) der Stütze (3) gebildet ist und wobei der Schritt des Wegbewegens des zweiten Wandelements (32) von der Position, in der es (32) wenigstens teilweise vorübergehend die proximale Endseite (42) des Raumes (4) verschließt den Schritt des wenigstens teilweisen Trennens des Halters (2) und der Stütze (3) einschließt.

15. Verfahren nach einem der Ansprüche 12 bis 14, wobei das erste Wandelement (31) durch eine erste Seitenwand (31) der Stütze (3) gebildet ist und wobei der Schritt des Wegbewegens des ersten Wandelements (31) von der Position, in der es (31) die distale Endseite (41) des Raums (4) vorübergehend wenigstens teilweise verschlossen hat, einen Schritt des wenigstens teilweisen Trennens des Halters (2) und der Stütze (3) umfasst.

## Revendications

1. Système de croissance (1) pour cultiver des plantes (6), comprenant un élément de maintien (2) qui définit au moins en partie au moins une pièce (4) destinée à contenir un milieu de croissance (5), dans lequel le côté supérieur de ladite pièce (4) est ouvert au moins en partie de manière à permettre aux plantes (6) de s'étendre vers le haut depuis le milieu de croissance (5) contenu dans ladite pièce (4) pendant l'utilisation du système de croissance (1), et dans lequel le système de croissance (1) comprend en outre un premier élément de paroi (31) pour fermer substantiellement et temporairement un côté d'extrémité distale (41) de ladite pièce (4) et dans lequel le système de croissance (1) est agencé pour permettre au premier élément de paroi (31) d'être éloigné de telle manière que le milieu de croissance (5) peut être étendu hors de ladite pièce (4) à travers le côté d'extrémité distale (41) de la pièce (4) qui est alors ouvert, dans lequel le système de croissance (1) comprend en outre un support (3) destiné à recevoir l'élément de maintien (2) et à supporter l'élément de maintien (2) dans une position substantiellement debout dudit élément de maintien (2), **caractérisé en ce que** le support (3) est pourvu d'une ou de plusieurs ouvertures (35) qui peuvent laisser passer un axe d'éjection (7) pour pousser l'élément de maintien (2) afin de l'extraire du support (3) vers le haut, et dans lequel le support (3) comprend un moyen de guidage (36), comme des surfaces de guidage convergentes et/ou un canal d'alignement à rétrécissement, pour guider l'axe d'éjection (7) vers l'ouverture (35) respective.

2. Système de croissance (1) selon la revendication 1, dans lequel le système de croissance (1) comprend en outre un deuxième élément de paroi (32) qui est destiné à fermer substantiellement et temporairement un côté d'extrémité proximale (42) de ladite pièce (4) situé à l'opposé de son côté d'extrémité distale (41), et lequel deuxième élément de paroi (32) peut être éloigné de sa position dans laquelle il ferme substantiellement le côté d'extrémité proximale (42) de la pièce (4).

3. Système de croissance (1) selon la revendication 1 ou 2, dans lequel le premier élément de paroi (31), qui peut être éloigné de sa position dans laquelle il ferme substantiellement le côté d'extrémité distale (41) de la pièce (4), est formé par le support (3), en particulier par une paroi latérale s'étendant substantiellement vers le haut (31) dudit support (3).

4. Système de croissance (1) selon les revendications 1 à 3, dans lequel le deuxième élément de paroi (32), qui peut être éloigné de sa position dans laquelle il ferme substantiellement le côté d'extrémité proximale (42) de la pièce (4), est formé par le support (3), en particulier par une paroi latérale s'étendant substantiellement vers le haut (32) dudit support (3).

5. Système de croissance (1) selon la revendication 3 ou 4, dans lequel le support (3) comprend une paroi inférieure (33), et dans lequel ladite paroi inférieure du support (33) est pourvue d'un ou de plusieurs trous de drainage (37).

6. Système de croissance (1) selon l'une quelconque des revendications précédentes, dans lequel une paroi inférieure (2B) de la pièce (4) destinée à contenir un milieu de croissance (5) est pourvue d'un ou de plusieurs trous de drainage.

7. Système de croissance (1) selon les revendications 5 et 6, dans lequel le système de croissance (1) est agencé de telle manière que, lorsque le support (3) supporte l'élément de maintien (2) pendant l'utilisation du système de croissance (1), ledit au moins un trou de drainage prévu dans la paroi inférieure de la pièce (2B) se situe substantiellement au-dessus dudit au moins un trou de drainage (37) prévu dans la paroi inférieure du support (33).

8. Système de croissance (1) selon la revendication 3, 4, 5 ou 7, en particulier selon la revendication 5 ou 7, dans lequel le support (3) est pourvu d'une ou de plusieurs entretoises, en particulier des pieds, de sorte qu'un côté inférieur (34A) de la paroi inférieure du support (34) peut être maintenu espacé d'une surface de sol sur laquelle est placé le support (3) pendant l'utilisation du système de croissance (1).

9. Système de croissance (1) selon l'une quelconque des revendications précédentes, dans lequel le système de croissance (1) comprend en outre au moins un axe ou tige d'éjection (7) pour pousser l'élément de maintien (2) hors du support (3) vers le haut.

10. Système de croissance (1) selon l'une quelconque des revendications précédentes, dans lequel la pièce (4) contient un milieu de croissance (5),
dans lequel de préférence le milieu de croissance (5) forme substantiellement un bloc cohérent et/ou le milieu de croissance (5) comprend des particules, en particulier des particules de terre, qui sont liées entre elles, notamment au moyen d'un agent de liaison, tel qu'une colle de terre.

11. Utilisation d'un système de croissance (1) selon l'une quelconque des revendications précédentes, dans laquelle ladite au moins une pièce (4) contient un milieu de croissance (5) et au moins une plante (6), et de préférence plusieurs plantes (6), pousse(nt) dans ledit système de croissance (5).

12. Procédé de repiquage ou de transplantation d'au moins une plante (6), comprenant les étapes suivantes :
fournir un système de croissance (1) qui comprend un élément de maintien (2) qui définit au moins en partie au moins une pièce (4) contenant un milieu de croissance (5), dans lequel est placée au moins une plante (6), et lequel système de croissance (1) comprend en outre un support (3) destiné à recevoir l'élément de maintien (2) et à supporter l'élément de maintien (2) dans une position substantiellement debout dudit élément de maintien (2), dans lequel le support (3) est pourvu d'une ou de plusieurs ouvertures (35) ;
extraire l'élément de maintien (2) du support (3) en le poussant vers le haut à l'aide d'au moins un axe ou tige d'éjection (7) qui passe par une ouverture respective parmi la ou les ouverture(s) (35) ;
éloigner un premier élément de paroi (31) d'une position dans laquelle il fermait temporairement un côté d'extrémité distale (41) de ladite pièce (4) au moins partiellement ; et
extraire de l'élément de maintien (2) le milieu de croissance (5) avec ladite au moins une plante (6) en faisant glisser le milieu de croissance (5) à travers le côté d'extrémité distale (41) de la pièce (4).

13. Procédé selon la revendication 12, dans lequel le procédé comprend en outre les étapes suivantes :
éloigner un deuxième élément de paroi (32) d'une position dans laquelle il fermait temporairement un côté d'extrémité proximale (42) de la pièce (4) au moins partiellement ; et
exercer une pression sur le milieu de croissance (5) via le côté d'extrémité proximale (42) de la pièce (4).

14. Procédé selon la revendication 13, dans lequel le deuxième élément de paroi (32) est formé par une deuxième paroi latérale (32) du support (3), et dans lequel l'étape consistant à éloigner le deuxième élément de paroi (32) de la position dans laquelle il (32) fermait temporairement au moins partiellement le côté d'extrémité proximale (42) de la pièce (4) comprend l'étape consistant à séparer l'élément de maintien (2) et le support (3) au moins partiellement.

15. Procédé selon l'une quelconque des revendications 12 à 14, dans lequel le premier élément de paroi (31) est formé par une première paroi latérale (31) du support (3), et dans lequel l'étape consistant à éloigner le premier élément de paroi (31) de la position dans laquelle il (31) fermait temporairement au moins partiellement le côté d'extrémité distale (41) de ladite pièce (4) comprend une étape consistant à séparer l'élément de maintien (2) et le support (3) au moins partiellement.
